# FASCICULE DE BREVET EUROPEEN

(11) **EP 3 909 430 B1**
(45) Date de publication et mention de la délivrance du brevet: **20.04.2022**
(21) Numéro de dépôt: 21170025.7
(22) Date de dépôt: 22.04.2021
(51) Int. Cl.: A22C 11/10

(54) **DISPOSITIF DE MISE EN PORTION DE SAUCISSES**
VORRICHTUNG ZUM PORTIONIEREN VON WÜRSTEN
DEVICE FOR DIVIDING SAUSAGES INTO PORTIONS

(30) Priorité: 13.05.2020 FR 2004718
(43) Date de publication de la demande: 17.11.2021
(73) Titulaire: Concept Epices Sarl, 49120 Chemillé-en-Anjou (FR)
(72) Inventeur: GINDREAU, Manuel, 49120 Chemillé-en-Anjou (FR)
(74) Mandataire: Lequien, Philippe

(56) Documents cités:
- EP-A1- 3 187 051
- FR-A1- 2 270 797
- FR-A1- 2 915 656
- US-B1- 6 482 079

## Description

Le domaine de l'invention est celui de la conception et de la fabrication d'équipements pour la production de saucisses.

L'invention a notamment pour objet un dispositif de mise en portions de saucisses à partir d'une saucisse continue, et dans lequel les portions de saucisses découpées sont refermées à leurs extrémités.

Dans le domaine de l'invention, des charcutiers peuvent produire manuellement des saucisses en torsadant une saucisse continue et en la partitionnant en la coupant au niveau des torsades.

Dans certains cas, ces professionnels disposent de dispositifs mécaniques de mise en portions permettant, à partir d'un produit fabriqué en grande longueur, de produire des portions individuelles.

Plus précisément, on connait des dispositifs pour la réalisation de saucisses à partir d'une saucisse continue constituée d'un produit alimentaire, tel qu'un hachis de viande ou de poisson, et/ou de légumes, inséré à l'intérieur d'un boyau souple.

Les dispositifs de mise en portions pour la fabrication de saucisses comprennent généralement au moins une paire de pinces opposées aptes à être déplacées l'une vers l'autre par des moyens d'actionnement entre une position ouverte et une position fermée afin de pincer le boyau rempli de produits alimentaires (voir FR 2270797 A1).

Chaque pince comprend un bord avant de pincement, sensiblement en forme de V. Les deux pinces sont décalées l'une par rapport à l'autre de sorte que, lors de leur déplacement vers la position fermée, les pinces se chevauchent à la manière d'une cisaille, et forment par leur bord avant un passage ou diaphragme dont la section diminue progressivement.

Lors du pincement, le boyau est resserré et le produit alimentaire est chassé de chaque côté du point de contraction.

Ces paires de pinces sont munies d'une lame. De cette façon, une paire de pinces forme également un organe de coupe de la saucisse continue. En effet, une fois que le boyau est resserré, il est alors coupé à l'endroit du resserrement.

Pour former correctement une saucisse, le produit alimentaire doit être maintenu dans la portion ainsi constituée. Pour éviter que le produit alimentaire ne sorte du boyau par les deux extrémités ouvertes du boyau, une première solution consiste à entourer l'extrémité d'un lien souple qui est noué bien serré, ou d'une agrafe mécanique en forme de U qui est ensuite écrasée pour que les deux branches du U se chevauchent.

Ces deux solutions sont efficaces mais complexes à mettre en oeuvre et impliquent l'utilisation d'un élément permettant de ligaturer le boyau, ce qui dénote par rapport à une saucisse réalisée manuellement sans lien.

Une autre solution consiste à effectuer une torsion sur le boyau entre les pinces de l'organe de coupe au moment où la portion de boyau est encore maintenue par les pinces. Par la suite, une découpe est réalisée sur le boyau entre les pinces. Après le découpage, les deux extrémités restent torsadées et maintiennent efficacement le produit alimentaire dans leur portion individuelle.

Il est toutefois considéré que cette solution est trop complexe et onéreuse à mettre en œuvre dans un appareil.

Il est encore connu la solution décrite dans le document de brevet publié sous le numéro EP3187051. La solution consiste à proposer un dispositif dans lequel les bords avant, en forme de V, de chacune des pinces entrent en contact avec la saucisse continue pour la pincer. Ces bords avant de pincement se chevauchent complètement lorsque les pinces sont dans une position de fermeture.

Cette solution permet d'exercer sur le boyau de la saucisse continue un déplacement transversal à l'axe longitudinal de la saucisse continue. Ainsi, lorsque le boyau est coupé, il a alors été préalablement pincé et étiré sur une certaine longueur, de manière à ce qu'il subisse un resserrement destiné à permettre, suite à la coupe du boyau, le maintien du produit alimentaire à l'intérieur du boyau.

Cette solution n'apporte toutefois pas pleine satisfaction du fait qu'il a été constaté que, dans certains cas, le produit n'est pas parfaitement maintenu à l'intérieur de la portion individuelle de la saucisse.

L'invention a notamment pour objectif de résoudre les inconvénients de l'art antérieur.

Plus précisément, l'invention a pour objectif de proposer un dispositif de mise en portions de saucisse à partir d'une saucisse continue qui présente la capacité à produire des saucisses individuelles dont le produit alimentaire est parfaitement contenu à l'intérieur du boyau, tout en présentant une conception aisée à mettre en œuvre.

L'invention a aussi pour objectif de proposer un tel dispositif qui présente une conception fiable.

L'invention a encore pour objectif de proposer un tel dispositif qui soit particulièrement peu onéreux à produire et à utiliser.

Ces objectifs, ainsi que d'autres qui apparaîtront par la suite, sont atteints par l'invention qui a pour objet un dispositif de mise en portion de saucisses à partir d'une saucisse continue formée d'un boyau souple contenant un produit alimentaire, le dispositif comprenant :
- un support ;
- une succession d'organes de serrage mobile autour du support, chaque organe de serrage comportant une paire de pinces, dont une pince femelle et une pince mâle, l'une au moins de la pince mâle et de la pince femelle étant mobile selon un axe de serrage perpendiculaire à un axe de défilement de la saucisse continue dans l'organe de serrage, les pinces étant susceptibles d'être animées par un déplacement de l'organe de serrage autour du support dans un mouvement de va et vient entre une position d'ouverture et une position de fermeture, les pinces dans la position de fermeture étant destinées à serrer et tirer la saucisse continue sur le support lors du déplacement de l'organe de serrage autour du support ;
- au moins un organe de coupe ;
   dans lequel la pince mâle présente un bord avant, et la pince femelle présente deux bords avant, une gorge s'étendant entre les deux bords avant et un fond, les bords avant de la pince femelle présentant une section, selon une coupe transversale à l'axe de défilement, en forme de V,
   et dans lequel, pour chaque paire de pinces en position de fermeture, les bords avant de la pince mâle et de la pince femelle ménagent un passage,
   caractérisé en ce que chaque pince femelle présente une paire d'ailes, les ailes s'étendant chacune à partir de l'un des bords avant, à l'extérieur de la gorge, la paire d'ailes s'évasant en direction du fond de la gorge,
   et en ce que chaque pince mâle comprend :
      - deux faces latérales s'étendant depuis le bord avant jusqu'à une partie arrière de la pince mâle ;
      - une excroissance sur chacune des faces latérales, les excroissances présentant chacune une face avant s'étendant à partir d'une partie du bord avant de la pince mâle qui participe à ménager le passage ;
      - les deux faces avant s'évasant en direction de la partie arrière de la pince mâle..

Selon une caractéristique principale de l'invention, des ailes bordent ainsi les côtés de chaque bord avant situés vers l'extérieur de la pince femelles. Ces ailes encadrent les deux bords avant de la pince femelle, et sont ainsi en amont et en aval des bords avant par rapport à un sens de progression de la saucisse continue le long de l'axe de défilement dans l'organe de serrage.

En d'autres termes, la pince femelle est épaissie de manière à former, pour chaque bord avant et en complément de chaque bord avant, des rebords s'évasant.

De ce fait, quand une portion, dite portion de liaison, de la saucisse continue est serrée entre les bords avant, alors les ailes exercent une pression sur les deux portions de la saucisse continue qui sont situées directement de part et d'autre de la portion de liaison.

En étant évasées, les ailes contribuent à serrer la saucisse continue en chassant progressivement le produit alimentaire, ceci en exerçant dans le même temps un à étirement du boyau souple le long de l'axe d'extension de la saucisse continue au sein de l'organe de serrage.

Cette conception permet de chasser efficacement le produit alimentaire contenu dans le boyau souple, tout en étirant ce dernier longitudinalement dans l'organe de serrage. L'étirement du boyau permet d'améliorer la fermeture des extrémités de la saucisse fermée.

Le dispositif selon l'invention est particulièrement simple à mettre en œuvre du fait qu'il ne nécessite notamment pas d'organe de torsadage de la saucisse continue. Les coûts de production et d'entretien du dispositif sont ainsi peu élevés comparativement à des dispositifs plus complexes.

Enfin, les organes de serrage du dispositif selon l'invention sont aisés à nettoyer grâce à leur conception, notamment par rapport à des pinces qui présenteraient de multiples éléments distincts et séparés les uns des autres, ainsi susceptibles d'être encrassés rapidement et d'être peu aisés à nettoyer.

Pendant une phase terminale du passage des pinces de l'organe de serrage depuis la position d'ouverture jusqu'à la position de fermeture, les faces avant de chacune des excroissances participent à exercer une pression sur la saucisse continue pour améliorer le chassement du produit alimentaire contenu dans le boyau souple et l'étirage du boyau souple.

Ces faces avant agissent en coopération avec la paire d'ailes

Avantageusement, chaque aile définit une portion principale de goulotte autour d'une partie du bord avant, à partir duquel l'aile s'étend, et qui participe à ménager le passage.

Cette portion principale de goulotte, présentant une forme évasée depuis le passage du fait de la forme évasée de la paire d'ailes, permet d'améliorer le chassement du produit alimentaire lors d'une phase terminale de fermeture des pinces et l'étirement du boyau souple lors de cette phase finale de fermeture des pinces.

Dans ce cas, avantageusement, la face avant de chaque excroissance s'étend depuis le bord avant en s'amenuisant, la face avant formant une portion secondaire de goulotte autour du bord avant de la pince mâle qui participe à ménager le passage,
et, pour chaque paire de pinces en position de fermeture, la portion secondaire de goulotte est espacée de la portion principale de goulotte par deux portions ouvertes de part et d'autre de la face avant.

De cette manière, une goulotte, ou tout au moins une forme plus complète de goulotte, est formée par la réunion de la paire de pinces.

La présence des portions ouvertes situées de part et d'autre de la face avant permet d'éviter un pincement du boyau souple de la saucisse continue et un déchirement de ce boyau souple.

De cette manière, il a été constaté que le dispositif améliore sa capacité à éviter de causer une déchirure de la saucisse continue lorsque la paire de pinces se referme, et ce notamment par rapport à une paire de pince qui formerait des goulottes entières en portion de fermeture.

Selon une solution, le bord avant de la pince mâle présente une section, selon une coupe transversale à l'axe de défilement, en forme de V, le V présentant deux branches et une zone de liaison des deux branches.

Selon cette solution, la pince mâle et la pince femelle présentent toutes les deux une forme de V.

Ces deux V se font alors face de manière à ce que, lors de la fermeture de la paire de pinces, les deux V forment un diaphragme se refermant en serrant progressivement la saucisse continue jusqu'à leurs zones de liaison qui constituent ainsi le passage.

Dans ce cas, selon une conception préférée, le bord avant de la pince mâle présente une largeur tendant à s'amenuiser le long de chaque branche depuis la zone de liaison.

Lors de la fermeture des pinces, les extrémités libres des branches de la forme en V ont tendance à rentrer d'abord dans la gorge présentée par la pince femelle. En présentant une largeur à ces extrémités qui est plus faible que celle de la zone de liaison, alors la fermeture de la pince est réalisée de manière sûre, en évitant un blocage relatif à un éventuel désalignement des deux pinces. Il est également évité un pincement précoce du boyau et un déchirement de ce boyau avant que les pinces n'aient atteint leur position de fermeture.

Avantageusement, pour chaque pince mâle, les excroissances présentent une section, selon une coupe transversale à l'axe de défilement, en forme de V qui :
- présente deux branches et une zone de liaison des deux branches ;
- est inversée à la forme de V présentée par la section du bord avant de la pince mâle ;
les zones de liaison des formes de V présentées par les sections respectivement du bord avant et des excroissances se rejoignant au niveau d'une portion du passage.

Les excroissances complémentent alors les ailes dans la position de fermeture des pinces.

Ces excroissances définissent ainsi, dans la position de fermeture des pinces et en coopération avec les ailes, des sillons dans le prolongement des portions ouvertes situées de part et d'autre de la face avant de chacune des excroissances.

Selon une première solution, les ailes s'évasent selon un profil concave.

Selon une deuxième solution, les ailes s'évasent selon un profil convexe.

Selon une troisième solution, les ailes s'évasent en biseau.

Selon une quatrième solution, les ailes s'évasent selon un profil présentant au moins deux portions successives distinctes présentant chacune un profil concave, ou convexe, ou droit.

Selon un mode de réalisation préféré, chaque pince mâle et chaque pince femelle est monobloc.

De cette manière, les pinces sont particulièrement simples à nettoyer, ce qui facilite l'intégration du dispositif dans une chaîne de production alimentaire. Ces pinces peuvent par exemple être en plastique.

Avantageusement, la pince mâle présente un espace d'accueil de ou de l'un des organes de coupe, l'espace d'accueil débouchant sur le bord avant, au moins sur une partie du bord avant de la pince mâle qui participe à former le passage.

De cette manière, quand les pinces de l'organe de serrage sont en position de fermeture, alors un organe de coupe peut venir trancher le boyau souple quand il est maintenu serré.

D'autres caractéristiques et avantages de l'invention apparaîtront plus clairement à la lecture de la description suivante de modes de réalisation préférentiels de l'invention, donnés à titre d'exemple illustratifs et non limitatifs, et des dessins annexés parmi lesquels :
- la figure 1 est une représentation schématique d'un dispositif, selon l'invention, de mise en portion de saucisses, selon une vue latérale ;
- la figure 2 est une représentation schématique d'une paire de pinces d'un organe de serrage du dispositif selon l'invention, la paire de pinces étant dans une position d'ouverture ;
- la figure 3 est une représentation schématique de la paire de pinces de la figure 2 dans une position de fermeture ;
- la figure 4 est une représentation schématique selon une vue en perspective de la paire de pinces de la figure 2 ;
- la figure 5 est une représentation schématique en perspective de trois quarts avant d'une pince mâle d'un organe de serrage ;
- la figure 6 est une représentation schématique selon une vue en perspective de trois quarts arrière de la pince mâle ;
- la figure 7 est une représentation schématique selon une vue en perspective avant d'une pince femelle d'un organe de serrage ;
- la figure 8 est une représentation schématique selon une vue du dessus inclinée illustrant un premier mode de réalisation des pinces ;
- la figure 9 est une représentation schématique selon une vue du dessus inclinée illustrant un deuxième mode de réalisation des pinces ;
- la figure 10 est une représentation schématique selon une vue du dessus inclinée illustrant un troisième mode de réalisation des pinces ;
- la figure 11 est une représentation schématique des pinces du premier mode de réalisation selon le plan de coupe XI-XI de la figure 3.

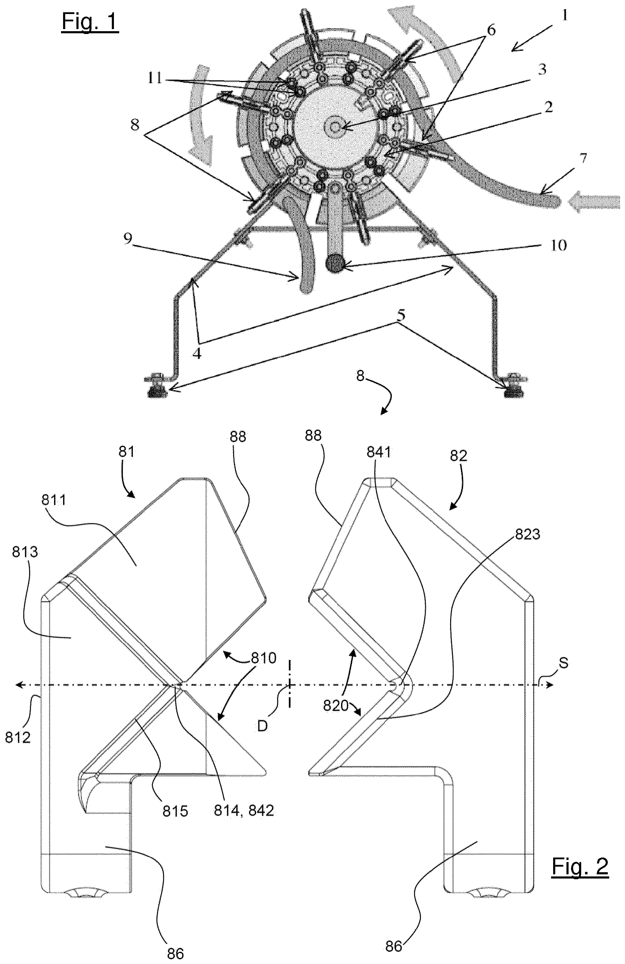

En référence à la figure 1, un dispositif 1 de mise en portion de saucisse à partir d'une saucisse continue 7, selon l'invention, est représenté.

La saucisse continue 7 est formée d'un boyau souple contenant un produit alimentaire, par exemple de la chair à saucisse.

Le dispositif 1 comprend :
- un support 2 ;
- des organes de serrage 6 qui sont disposés autour du support 2 ;
- au moins un organe de coupe, et notamment un organe de coupe pour chaque organe de serrage 6.

Le dispositif 1 comprend également une manivelle 10 permettant d'animer manuellement le dispositif 1.

Selon un autre mode de réalisation envisageable, le dispositif 1 peut comprendre un moteur remplaçant la manivelle 10.

Selon le présent mode de réalisation, le support 2 comprend un bâti 4 doté de pieds 5, un axe rotatif 3 monté horizontalement sur le bâti 4, et une platine circulaire montée mobile en rotation sur l'axe rotatif 3.

Les organes de serrage 6 sont disposés sur des faces latérales de la platine circulaire, chacun à une position donnée autour d'un cercle centré autour de l'axe rotatif 3.

Le dispositif est ainsi conçu pour recevoir la saucisse continue 7.

En référence aux figures 1 à 4, les organes de serrage 6 comprennent une paire de pinces 8 destinées à serrer et à entourer la saucisse continue 7 afin de l'entraîner suite au déplacement des organes de serrage 6 autour du support 2.

En effet, la saucisse continue 7 rejoint la platine rotative tangentiellement au cercle supportant les organes de serrage 6. Cette saucisse continue 7 est suffisamment souple pour prendre une forme circulaire imposée par les organes de serrage 6.

La saucisse continue 7 est ainsi serrée par les organes de serrage 6 et entraînée par la rotation de la platine rotative autour de l'axe rotatif 3.

Au cours de cette rotation, le boyau subit un resserrement progressif jusqu'à ce que le produit alimentaire soit chassé de chaque côté d'un point de contraction.

Selon le présent mode de réalisation et tel que cela est détaillé par la suite, dans la position de fermeture des pinces 8, le dispositif 1 comprend également des organes de coupe conçus pour couper le boyau traversant les organes de serrage.

Selon le présent mode de réalisation, le dispositif 1 comprend un organe de coupe pour chaque organe de serrage 6. En référence aux figures 1 à 4, le dispositif 1 comprend une succession d'organes de serrage 6 qui sont chacun mobiles autour du support 2.

Chaque organe de serrage 6 comprend une paire de pinces 8. Plus précisément, la paire de pinces 8 est composée d'une pince femelle 80 et d'une pince mâle 81.

Au moins l'une de la pince mâle 81 et de la pince femelle 80 est mobile selon un axe de serrage S qui est perpendiculaire à un axe de défilement D de la saucisse continue 7 dans l'organe de serrage 6.

Ces pinces 8 sont en effet susceptibles d'être animées par un déplacement de de l'organe de serrage 6 autour du support 2, dans un mouvement de va-et-vient entre une position d'ouverture et une position de fermeture.

Tel qu'évoqué précédemment, les pinces 8, dans la position de fermeture, sont destinées à serrer et tirer la saucisse continue 7 sur le support 2 lors du déplacement de l'organe de serrage 6 autour du support 2.

Les pinces 8 sont notamment entraînées en translation par des cames solidarisées au support 2, par exemple selon un système semblable à celui décrit dans la demande de brevet française déposée sous le numéro 1900476.

Chacune de la pince mâle 81 et de la pince femelle 82 présente une base 86 percée de trous 87 destinés à former une direction de coulissement d'au moins l'une de la pince mâle 81 et de la pince femelle 80, selon l'axe de serrage S.

Les pinces 8 sont par exemples montées mobiles sur deux axes parallèles, ces deux axes étant insérés au travers des trous 87.

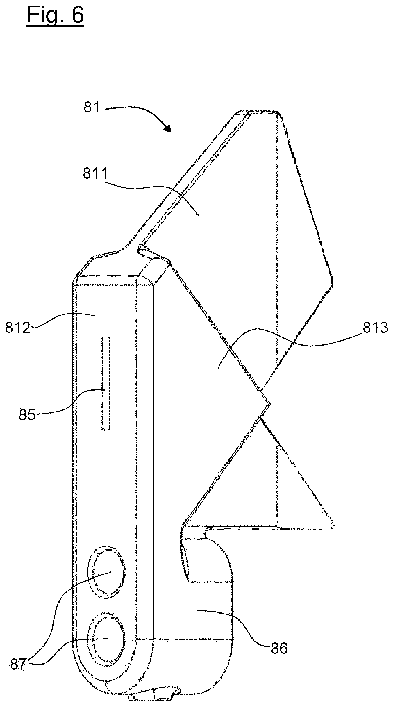

En référence aux figures 2 à 7, et 11, la pince mâle 81 présente un bord avant 810.

La pince femelle 82 présente quant à elle :
- deux bords avant 820 ;
- une gorge 821 s'étendant entre les deux bords avant 820, et
- un fond 822 de la gorge 821.

Dans la position de fermeture des pinces, la pince mâle 81 s'insère dans la pince femelle 82 de manière à ce que le bord avant 810 de la pince mâle 81 rentre majoritairement dans la gorge 821 de la pince femelle 82.

Les bords avant 810, 820 correspondent à des parties des pinces 8 qui sont destinées à rentrer en premier en contact avec la saucisse continue 7 lors de la fermeture des pinces 8.

Selon les présents modes de réalisation, les bords avant 820 de la pince femelle 82 présentent tous une section, selon une coupe transversale à l'axe de défilement D, en forme de V.

Plus précisément, les deux bords avant 820 de la pince femelle 82 présentent tous les deux une section identique.

Aussi, le bord avant 810 de la pince mâle 81 présente une section, selon une coupe transversale à l'axe de défilement D, en forme de V, avec deux branches 8102, et une zone de liaison 8101 des deux branches 8102.

De plus, la forme de V du bord avant 810 de la pince mâle 81 est inversée par rapport à la forme de V présenté par les bords avant 820 de la pince femelle 82.

Grâce à ces formes en V, les pinces 8 forment un diaphragme dont la section diminue lors de la fermeture des pinces 8.

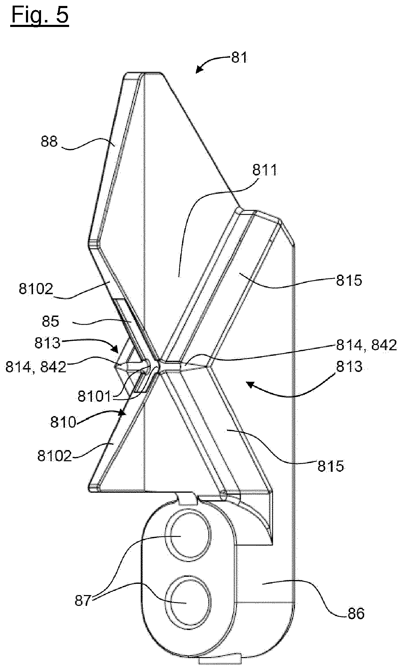

En référence à la figure 5, le bord avant 810 de la pince mâle 81 présente une largeur maximale au niveau de la zone de liaison 8101, cette largeur s'amenuisant le long de chacune des branches 8102 qui s'étendent depuis la zone de liaison 8101. De cette manière les pinces 8 se referment plus aisément tout en évitant de pincer précocement la saucisse continue 7.

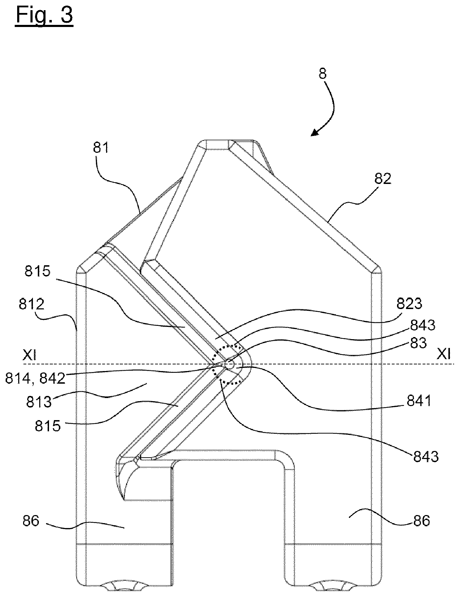

De manière classique, pour chaque paire de pinces 8, et tel que cela est cela est illustré par la figure 3 où la paire de pince 8 est en position de fermeture, les bords avant 810 de la pince mâle 81 et les bords avant 820 de la pince femelle 82 ménagent un passage 83.

Ce passage 83 peut par exemple être cylindrique, et notamment cylindrique de révolution autour de l'axe de défilement D.

Dans la position de fermeture, le boyau souple est destiné à passer au travers du passage 83 alors que tout le produit alimentaire, ou quasiment, a été préalablement chassé de cette portion de la saucisse continue sous l'effet des pinces 8.

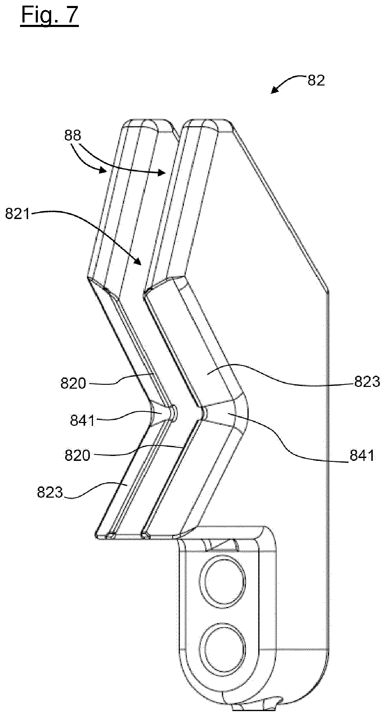

En référence aux figures 7 à 11 et tel que cela est détaillé par la suite, selon le principe de l'invention, chaque pince femelle 82 présente une paire d'ailes 823.

Ces ailes 823 s'étendent chacune à partir de l'un des bords avant 820 de la pince femelle 82, à l'extérieur de la gorge 821. Cette paire d'ailes 823 s'évase en direction du fond 822 de la gorge 821.

En d'autres termes, chaque pince femelle 82 présente des facettes s'étendant depuis les bords avant 820, les facettes étant destinées à border les bords avant 820 en s'évasant depuis les bords avants 820 vers une partie arrière de la pince femelle 82.

Ces ailes 823 sont notamment formées par un épaississement de la pince femelle 82, en dehors de la gorge 821, pour former des surfaces complémentaires de la pince femelle 82 destinée à rentrer en contact avec la saucisse continue 7, autre que les bords avant 820.

Avantageusement, chaque aile 823 s'étend depuis son bord avant 820 et selon l'axe de défilement D, selon une distance H1 d'au moins 3 mm, et préférentiellement de 9,5 mm.

Il est à noter qu'un bord avant 820 présente classiquement, selon l'axe de défilement D, une épaisseur d'environ 2 mm au niveau de sa partie qui participe à former le passage.

Tel que cela est illustré par les figures 2, 3 et 7, chaque aile 823 définit également une portion principale 841 d'une goulotte autour d'une partie du bord avant 820, à partir duquel l'aile 823 s'étend, et qui participe à aménager le passage 83.

Notamment, les bords avant 820 de la pince femelle 82 présentent, selon une coupe transversale à l'axe de défilement D, une forme en V comprenant deux branches et une zone de liaison des deux branches. Cette zone de liaison, ou pointe du V, des deux bords avant 820 est destinée à participer à ménager le passage 83.

C'est ainsi depuis ces zones de liaison que chaque aile 823 définit la portion principale 841 de goulotte qui s'inscrit, de manière plus générale, dans une portion de tronc de cône dont la plus petite base est située au niveau du bord avant 820.

En référence aux figures 2 à 6, la pince mâle 81 comprend deux faces latérales 811 qui s'étendent depuis le bord avant 810 jusqu'à une partie arrière 812 de la pince mâle.

La pince mâle 81 comprend également deux excroissances 813, dont une excroissance 813 sur chacune de ces faces latérales 811.

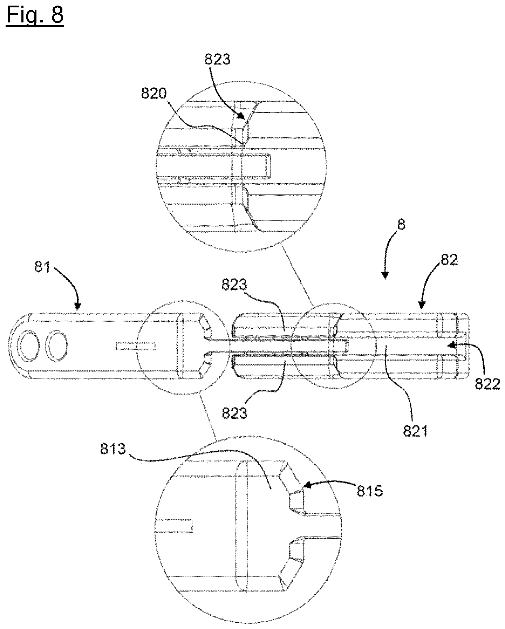

Tel que cela est illustré par les figures 8 à 11, les excroissances 813 s'étendent depuis les faces latérales 811 jusqu'à arriver à la même hauteur des ailes 823, le long de l'axe de défilement.

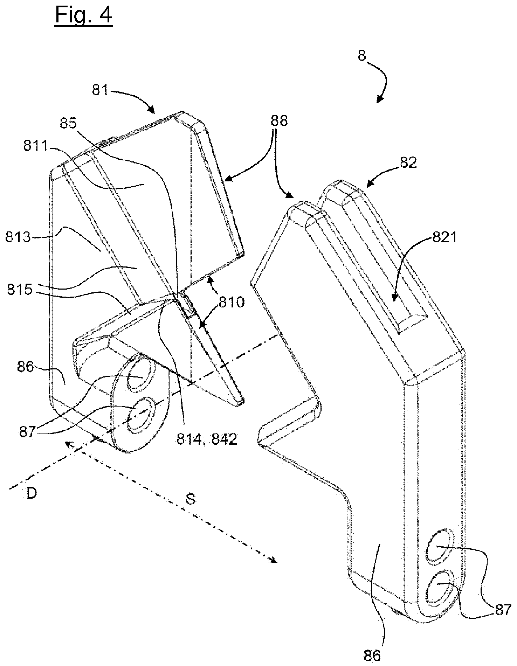

Tel que cela est illustré notamment par les figures 4 et 5, chaque excroissance 813 présente une face avant 814 qui s'étend à partir d'une partie du bord avant 810 de la pince mâle 81 qui participe à ménager le passage 83. Les deux faces avant 814 s'évasent en direction de la partie arrière 812 de la pince mâle 81 de la même manière que les ailes 823 s'évasent en direction d'une partie arrière de la pince femelle 82.

Ces excroissances 813 présentent également deux faces supplémentaires 815 qui sont chacune accolées à la face avant 814 et qui s'évasent de la même manière en direction de la partie arrière 812 de la pince mâle 81.

Tel que cela est visible sur les figures 4 et 5, la face avant 814 de chaque excroissance 813 s'étend depuis le bord avant 810 en s'amenuisant.

Ces faces avant 814 forment des portions secondaires 842 de goulotte autour du bord avant 810 de la pince mâle 81 qui participent à aménager le passage 83.

Ces portions secondaires 842 de goulottes sont complémentaires des portions principales 841 de goulotte.

En référence à la figure 3, lorsqu'une paire de pinces 8 est en position de fermeture, alors la portion secondaire 842 de goulotte est espacée de la portion principale 841 par des portions ouvertes 843 (représentées en pointillés).

Ces portions ouvertes 843 se prolongent par deux sillons formés par la réunion des faces supplémentaires 815 des excroissances 813 et des ailes 823 des pinces femelles 82.

Ces portions ouvertes 843 participent à la bonne formation de portions de saucisses à partir de la saucisse continue 7, et notamment au bon chassement du produit contenu dans le boyau, ainsi qu'à éviter que le boyau souple ne se coince et se déchire.

En référence aux figures 2, 3, 4, 5 et 6, pour chaque pince mâle 81, les excroissances 813 présentent une section en forme de V, selon une coupe transversale à l'axe de défilement D.

Cette section en forme de V présente deux branches (les faces supplémentaires 815) et une zone de liaison des deux branches (la face avant 814).

Cette forme de V est également inversée par rapport à la forme de V présentée par la section du bord avant 810 de la pince mâle 81.

En d'autres termes, et tel que cela est illustré par la figure 2, les formes de V présentée par la section des excroissances et par la section du bord avant 810 de la pince mâle 81 forment un X. Les zones de liaison 8101 et formes de V présentées par les sections respectivement du bord avant 810 et des excroissances 813 se rejoignent au niveau d'une portion du passage 83.

La direction des branches de la forme de V présentée par la section des excroissances 813 est identique à celle des bords avant 820 de la pince femelle 82. De cette manière, ces formes en V s'emboîtent dans la position de fermeture des pinces 8.

Les modes de réalisation illustrés par les figures 8, 9, 10 illustrent différents profils des ailes 823, ces profils pouvant également être adoptés par les faces avant 814 et/ou les faces supplémentaires 815 des excroissances 813.

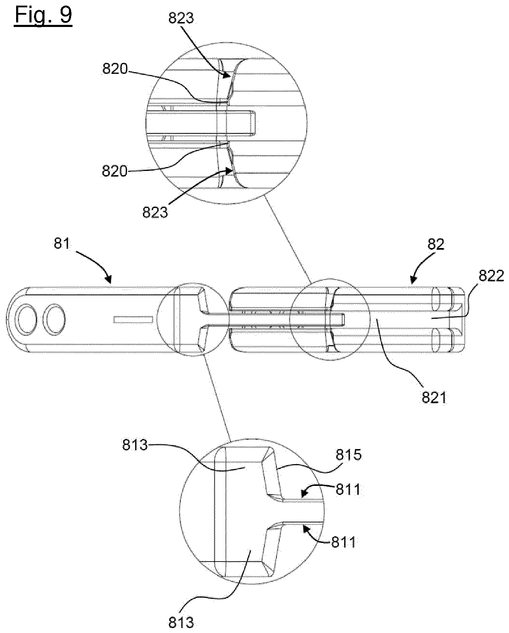

En référence à la figure 9, les ailes 823 s'évasent en biseau.

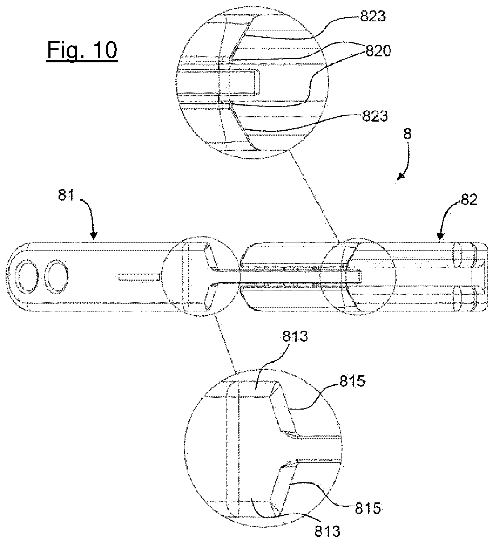

En référence à la figure 10, les ailes 823 s'évasent en biseau avec un angle plus prononcé que le mode de réalisation illustré par la figure 9.

Selon d'autres modes de réalisation envisageables, les ailes peuvent s'évaser selon un profil concave ou un profil convexe.

Un profil concave ou convexe, sans portion droite, est particulièrement adapté à la confection de saucisses présentant un diamètre important, évitant notamment un éclatement du boyau.

Il est encore envisageable que les ailes 823 s'évasent selon un profil avec au moins deux portions successives distinctes qui présentent chacune un profil concave, convexe, ou droit.

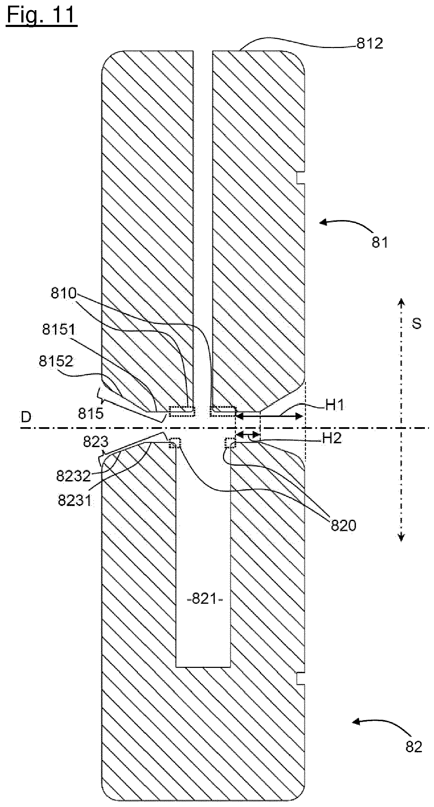

Notamment, tel qu'illustré par les figures 8 et 11, les ailes 823 s'évasent selon un profil présentant deux portions successives distinctes ayant chacune un profil droit, dont une première portion 8231 et une deuxième portion 8232.

Ces différents profils permettent de faire varier la manière dont est chassé le produit dans le boyau, et dont est étiré le boyau souple. Des variations relatives aux profils peuvent être observées sur les extrémités des portions de saucisses 9 produites.

Le mode de réalisation illustré par les figures 8 et 11 est préféré.

Dans ce mode de réalisation, la première portion 8231 située entre le bord avant 820 et la deuxième portion 8232 est alignée avec le bord avant 820 et s'étend parallèlement à l'axe de défilement D.

En référence à la figure 11, chaque première portion 8231 des ailes 823 présente une longueur H2, selon l'axe de défilement D qui est comprise entre 1 mm et 5 mm, et qui est préférentiellement égale à 3 mm.

Ceci permet de mieux chasser le produit alimentaire et de créer une longueur plus importante de boyau entièrement dépourvue de produit alimentaire, ou quasiment. L'étirement du boyau est également réalisé sur une longueur plus importante. Les portions de saucisses 9 obtenues sont mieux refermées à leurs extrémités. Avec une longueur H2 de 3 mm, il a été remarqué que des saucisses du type chipolata sont mieux refermées.

Il est bien entendu possible que cette première portion 8231 ne soit pas parfaitement droite et présente une légère courbure.

La première portion 8231 s'étend alors essentiellement parallèlement à l'axe de défilement D, tandis que les deuxième portions 8232 de chacune des ailes 823 s'évasent l'une par rapport à l'autre vers l'arrière de la pince femelle 82 (soit le fond de la gorge 821).

Encore plus préférentiellement et toujours selon la figure 11, les excroissances présentent un profil identique, soit des premières portions 8151 et des deuxièmes portions 8152 symétriques à la première portion 8231 et à la deuxième portion 8232 des ailes 823 par rapport à un plan dans lequel est inscrit l'axe de défilement D et qui est perpendiculaire à l'axe de serrage S.

Préalablement au serrage de la saucisse continue, cette dernière doit être introduite dans l'organe de serrage 6.

A cet effet, et tel que cela est illustré par les figures 2, 4, 5 et 7, la pince mâle 81 et la pince femelle 82 présentent chacune des parties supérieures 88 en biseau formant ensemble un entonnoir dirigé vers l'axe de défilement D de la saucisse continue dans l'organe de serrage 6.

Ces parties supérieures 88 permettent de guider la saucisse continue lorsqu'elle est insérée dans l'organe de serrage tel que cela est illustré par la figure 1.

Tel que cela est illustré par les figures 4, 5 et 6, la pince mâle 81 présente un espace d'accueil 85 d'un organe de coupe. Cet espace d'accueil 85 débouche sur le bord avant 810 et notamment au moins sur une partie du bord avant 810 de la pince mâle 81 qui participe à former le passage 83.

Ainsi, dans la position de fermeture des pinces 8, l'organe de fermeture peut déboucher dans le passage 83 pour sectionner le boyau souple.

Selon le présent mode de réalisation, chacune des pinces mâles 81 et des pinces femelles 82 est réalisée de manière monobloc en un seul matériau. Par exemple, les pinces 8 peuvent être formées à partir d'un matériau plastique, et être imprimées en 3D.

## Revendications

1. Dispositif (1) de mise en portion de saucisses (9) à partir d'une saucisse continue (7) formée d'un boyau souple contenant un produit alimentaire, le dispositif (1) comprenant :
- un support (2) ;
- une succession d'organes de serrage (6) mobile autour du support (2), chaque organe de serrage (6) comportant une paire de pinces (8), dont une pince femelle (80) et une pince mâle (81), l'une au moins de la pince mâle (81) et de la pince femelle (80) étant mobile selon un axe de serrage (S) perpendiculaire à un axe de défilement (D) de la saucisse continue (7) dans l'organe de serrage (6), les pinces (8) étant susceptibles d'être animées par un déplacement de l'organe de serrage (6) autour du support (2) dans un mouvement de va et vient entre une position d'ouverture et une position de fermeture, les pinces (8) dans la position de fermeture étant destinées à serrer et tirer la saucisse continue (7) sur le support (2) lors du déplacement de l'organe de serrage (6) autour du support (2) ;
- au moins un organe de coupe ;
dans lequel la pince mâle (81) présente un bord avant (810), et la pince femelle (82) présente deux bords avant (820), une gorge (821) s'étendant entre les deux bords avant (820) et un fond (822), les bords avant (820) de la pince femelle (82) présentant une section, selon une coupe transversale à l'axe de défilement (D), en forme de V,
et dans lequel, pour chaque paire de pinces (8) en position de fermeture, les bords avant (810, 820) de la pince mâle (81) et de la pince femelle (82) ménagent un passage (83), chaque pince femelle (82) présentant une paire d'ailes (823), les ailes (823) s'étendant chacune à partir de l'un des bords avant (820), à l'extérieur de la gorge (821), la paire d'ailes (823) s'évasant en direction du fond de la gorge (822), chaque pince mâle (81) comprenant :
- deux faces latérales (811) s'étendant depuis le bord avant (810) jusqu'à une partie arrière (812) de la pince mâle (81);
**caractérisé en ce que** chaque pince mâle comprend aussi une excroissance (813) sur chacune des faces latérales (811), les excroissances (813) présentant chacune une face avant (814) s'étendant à partir d'une partie du bord avant (810) de la pince mâle (81) qui participe à ménager le passage (83) ;
les deux faces avant (814) s'évasant en direction de la partie arrière (812) de la pince mâle (81).

2. Dispositif (1) selon l'une quelconque des revendications précédentes, **caractérisé en ce que** chaque aile (823) définit une portion principale (841) de goulotte autour d'une partie du bord avant (820), à partir duquel l'aile (823) s'étend, qui participe à ménager le passage (83).

3. Dispositif (1) selon la revendication 2, **caractérisé en ce que** la face avant (814) de chaque excroissance (813) s'étend depuis le bord avant (810) en s'amenuisant, la face avant (814) formant une portion secondaire (842) de goulotte autour du bord avant (810) de la pince mâle (81) qui participe à ménager le passage (83),
et **en ce que**, pour chaque paire de pinces (8) en position de fermeture, la portion secondaire (842) de goulotte est espacée de la portion principale (841) de goulotte par deux portions ouvertes (843) de part et d'autre de la face avant (814).

4. Dispositif (1) selon l'une quelconque des revendications précédentes, **caractérisé en ce que** le bord avant (810) de la pince mâle (81) présente une section, selon une coupe transversale à l'axe de défilement (D), en forme de V, le V présentant deux branches (8102) et une zone de liaison (8101) des deux branches (8102).

5. Dispositif (1) selon la revendication précédente, **caractérisé en ce que** le bord avant (810) de la pince mâle (81)présente une largeur tendant à s'amenuiser le long de chaque branche (8102) depuis la zone de liaison (8101).

6. Dispositif (1) selon la revendication 3 et l'une quelconque des revendications 4 et 5, **caractérisé en ce que**, pour chaque pince mâle (81), les excroissances (813) présentent une section, selon une coupe transversale à l'axe de défilement (D), en forme de V qui :
- présente deux branches et une zone de liaison des deux branches ;
- est inversé à la forme de V présentée par la section du bord avant (810) de la pince mâle (81) ;
les zones de liaison (8101) des formes de V présentées par les sections respectivement du bord avant (810) et des excroissances (813) se rejoignant au niveau d'une portion du passage (83).

7. Dispositif (1) selon l'une quelconque des revendications précédentes, **caractérisé en ce que** les ailes (823) s'évasent selon un profil concave.

8. Dispositif (1) selon l'une quelconque des revendications 1 à 6, **caractérisé en ce que** les ailes (823) s'évasent selon un profil convexe.

9. Dispositif (1) selon l'une quelconque des revendications 1 à 6, **caractérisé en ce que** les ailes (823) s'évasent en biseau.

10. Dispositif (1) selon l'une quelconque des revendications 1 à 6, **caractérisé en ce que** les ailes (823) s'évasent selon un profil présentant au moins deux portions successives distinctes présentant chacune un profil concave, ou convexe, ou droit.

11. Dispositif (1) selon l'une quelconque des revendications précédentes, **caractérisé en ce que** chaque pince mâle (81) et chaque pince femelle (82) est monobloc.

12. Dispositif (1) selon l'une quelconque des revendications précédentes, **caractérisé en ce que** la pince mâle (81) présente un espace d'accueil (85) de ou de l'un des organes de coupe, l'espace d'accueil débouchant sur le bord avant (810), au moins sur une partie du bord avant (810) de la pince mâle (81) qui participe à former le passage (83).

## Patentansprüche

1. Vorrichtung (1) zur Portionierung von Würsten (9) ausgehend von einer durchgehenden Wurst (7), die aus einem flexiblen Darm ausgebildet ist, der ein Lebensmittelprodukt enthält, wobei die Vorrichtung (1) Folgendes umfasst:
- eine Halterung (2);
- eine Folge von Spanngliedern (6), die um die Halterung (2) mobil sind, wobei jedes Spannglied (6) ein Klemmenpaar (8) umfasst, davon eine Buchsenklemme (80) und eine Steckklemme (81), wobei wenigstens eine von der Steckklemme (81) und der Buchsenklemme (80) mobil ist gemäß einer Spannachse (S), die rechtwinklig zu einer Laufachse (D) der durchgehenden Wurst (7) in dem Spannglied (6) verläuft, wobei die Klemmen (8) durch eine Deplatzierung des Spanngliedes (6) um die Halterung (2) in einer Hin- und Herbewegung zwischen einer Öffnungspositition und einer Schließposition bewegt werden können, wobei die Klemmen (8) in der Schließposition dafür bestimmt sind, die durchgehende Wurst (7) auf der Halterung (2) während der Deplatzierung des Spannglieds (6) zu spannen und um die Halterung (2) zu ziehen;
- wenigstens ein Schneideglied;
in welchem die Steckklemme (81) einen vorderen Rand (810) aufweist und die Buchsenklemme (82) zwei vordere Ränder (820) aufweist, wobei sich eine Nut (821) zwischen den beiden vorderen Rändern (820) und einer Rückseite (822) erstreckt, wobei die vorderen Ränder (820) der Buchsenklemme (82) einen Bereich aufweisen gemäß einem Querschnitt der Laufachse (D) in V-Form,
und in welchem für jedes Klemmenpaar (8) in Schließposition die vorderen Ränder (810, 820) der Steckklemme (81) und der Buchsenklemme (82) einen Durchlass (83) freihalten,
wobei jede Buchsenklemme (82) ein Flügelpaar (823) aufweist, wobei sich die Flügel (823) jeweils ausgehend von einem der vorderen Ränder (820) zum Äußeren der Nut (821) erstrecken, wobei sich das Flügelpaar (823) in Richtung der Rückseite der Nut (822) erstreckt,
wobei jede Steckklemme (81) Folgendes umfasst:
- zwei seitliche Flächen (811), die sich von dem vorderen Rand (810) bis zu einem hinteren Teil (812) der Steckklemme (81) erstrecken;
**dadurch gekennzeichnet, dass** jede Steckklemme außerdem eine Ausstülpung (813) auf jeder der seitlichen Flächen (811) umfasst, wobei die Ausstülpungen (813) jeweils eine vordere Seite (814) aufweisen, die sich ausgehend von einem Teil des vorderen Randes (810) der Steckklemme (81) erstreckt, der dazu beiträgt, den Durchlass (83) freizuhalten;
wobei sich die beiden vorderen Ränder (814) in Richtung des hinteren Teiles (812) der Steckklemme (81) aufweiten.

2. Vorrichtung (1) nach einem der vorhergehenden Ansprüche, **dadurch gekennzeichnet, dass** jeder Flügel (823) einen Hauptrinnenabschnitt (841) um einen Teil des vorderen Randes (820) umfasst, ausgehend von dem sich der Flügel (823) erstreckt, der dazu beiträgt, den Durchlass (83) freizuhalten.

3. Vorrichtung (1) nach Anspruch 2, **dadurch gekennzeichnet, dass** sich die Vorderseite (814) jeder Ausstülpung (813) ausgehend von dem vorderen Rand (810) erstreckt und sich dabei verjüngt, wobei die vordere Seite (814) einen sekundären Rinnenbschnitt (842) um den vorderen Rand (810) der Steckklemme (81) bildet, der dazu beiträgt, den Durchlass (83) freizuhalten,
und dadurch, dass für jedes Klemmenpaar (8) in der Schließposition der sekundäre Rinnenabschnitt (842) von dem Hauptrinnenabschnitt (841) durch zwei offene Abschnitte (843) beidseitig der vorderen Seite (814) beabstandet ist.

4. Vorrichtung (1) nach einem der vorhergehenden Ansprüche, **dadurch gekennzeichnet, dass** der vordere Rand (810) der Steckklemme (81) einen Bereich gemäß einem Querschnitt der Laufachse (D) in V-Form aufweist, wobei das V zwei Zweige (8102) und eine Verbindungszone (8101) der beiden Zweige (8102) aufweist.

5. Vorrichtung (1) nach dem vorhergehenden Anspruch, **dadurch gekennzeichnet, dass** der vordere Rand (810) der Steckklemme (81) eine Breite aufweist, die dazu tendiert, sich entlang jedes Zweiges (8102) ausgehend von der Verbindungszone (8101) zu verjüngen.

6. Vorrichtung (1) nach Anspruch 3 und einem der Ansprüche 4 und 5, **dadurch gekennzeichnet, dass** für jede Steckklemme (81) die Ausstülpungen (813) einen Bereich gemäß einem Querschnitt der Laufachse (D) in V-Form aufweisen, der:
- zwei Zweige und eine Verbindungszone der beiden Zweige aufweist;
- umgekehrt zu der V-Form ist, die der Bereich des vorderen Randes (810) der Steckklemme (81) aufweist;
wobei die Verbindungszonen (8101) der V-Formen, die die jeweiligen Bereiche des vorderen Randes (810) und der Ausstülpungen (813) aufweisen, sich auf der Ebene eines Abschnitts des Durchlasses (83) treffen.

7. Vorrichtung (1) nach einem der vorhergehenden Ansprüche, **dadurch gekennzeichnet, dass** sich die Flügel (823) gemäß einem konkaven Profil aufweiten.

8. Vorrichtung (1) nach einem der Ansprüche 1 bis 6, **dadurch gekennzeichnet, dass** sich die Flügel (823) gemäß einem konvexen Profil aufweiten.

9. Vorrichtung (1) nach einem der Ansprüche 1 bis 6, **dadurch gekennzeichnet, dass** sich die Flügel (823) schräg aufweiten.

10. Vorrichtung (1) nach einer der Ansprüche 1 bis 6, **dadurch gekennzeichnet, dass** sich die Flügel (823) gemäß einem Profil aufweiten, das wenigstens zwei aufeinanderfolgende, unterschiedliche Abschnitte aufweist, die jeweils ein konkaves oder konvexes oder gerades Profil aufweisen.

11. Vorrichtung (1) nach einem der vorhergehenden Ansprüche, **dadurch gekennzeichnet, dass** jede Steckklemme (81) und jede Buchsenklemme (82) einteilig ist.

12. Vorrichtung (1) nach einem der vorhergehenden Ansprüche, **dadurch gekennzeichnet, dass** die Steckklemme (81) einen Aufnahmebereich (85) für das oder die Schneideglieder aufweist, wobei der Aufnahmebereich in den vorderen Rand (810) mündet, wenigstens in einen Teil des vorderen Randes (810) der Steckklemme (81), der dazu beiträgt, den Durchlass (83) zu bilden.

## Claims

1. Device (1) for dividing sausages (9) into portions from a continuous sausage (7) made of a flexible casing containing food product, the device (1) comprising:
- a support (2);
- a succession of clamping members (6) movable around the support (2),
each clamping member (6) including a pair of clamps (8), of which one female clamp (80) and one male clamp (81), at least one of the male clamp (81) and the female clamp (80) being movable along a clamping axis (S) perpendicular to a scrolling axis (D) of the continuous sausage (7) in the clamping member (6), the clamps (8) being able to be moved by a movement of the clamping member (6) around the support (2) in a reciprocating movement between an opening position and a closing position, the clamps (8) in the closing position being intended to clamp and pull the continuous sausage (7) on the support (2) during the movement of the clamping member (6) around the support (2);
- at least one cutting member;
wherein the male clamp (81) has a front edge (810), and the female clamp (82) has two front edges (820), a recess (821) extending between the two front edges (820) and a bottom (822), the front edges (820) of the female clamp (82) having a V-shaped cross-section along a cut transversal to the scrolling axis (D),
and wherein, for each pair of clamps (8) in the closing position, the front edges (810, 820) of the male clamp (81) and of the female clamp (82) provide a passage (83), each female clamp (82) having a pair of vanes (823), the vanes (823) each extending from one of the front edges (820), outside of the recess (821), the pair of vanes (823) flaring in the direction of the bottom of the recess (822),
each male clamp (81) comprising:
- two side faces (811) extending from the front edge (810) to a rear part (812) of the male clamp (81); **characterised in that** each male clamp also comprises an excrescence (813) on each of the side faces (811), the excrescences (813) each having a front face (814) extending from a part of the front edge (810) of the male clamp (81) which contributes to providing the passage (83) ;
the two front faces (814) flaring in the direction of the rear part (812) of the male clamp (81).

2. Device (1) according to any one of the preceding claims, **characterised in that** each vane (823) defines a main duct portion (841) around a part of the front edge (820), from which the vane (823) extends, which contributes to providing the passage (83).

3. Device (1) according to claim 2, **characterised in that** the front face (814) of each excrescence (813) extends from the front edge (810) diminishing, the front face (814) forming a secondary duct portion (842) around the front edge (810) of the male clamp (81) which contributes to providing the passage (83),
and **in that**, for each pair of clamps (8) in the closing position, the secondary duct portion (842) is spaced apart from the main duct portion (841) by two open portions (843) on either side of the front face (814).

4. Device (1) according to any one of the preceding claims, **characterised in that** the front edge (810) of the male clamp (81) has a V-shaped cross-section along a cut transversal to the scrolling axis (D), the V having two branches (8102) and a zone for connecting (8101) the two branches (8102).

5. Device (1) according to the preceding claim, **characterised in that** the front edge (810) of the male clamp (81) has a width tending to diminish along each branch (8102) from the connecting zone (8101).

6. Device (1) according to claim 3 and any one of claims 4 and 5, **characterised in that**, for each male clamp (81), the excrescences (813) have a V-shaped cross-section along a cut transversal to the scrolling axis (D), which:
- has two branches and a zone for connecting the two branches;
- is inverted to the V-shape presented by the cross-section of the front edge (810) of the male clamp (81); the zones for connecting (8101) the V-shapes presented by the cross-sections respectively of the front edge (810) and of the excrescences (813) being joined at a portion of the passage (83).

7. Device (1) according to any one of the preceding claims, **characterised in that** the vanes (823) are flared along a concave profile.

8. Device (1) according to any one of claims 1 to 6, **characterised in that** the vanes (823) are flared along a convex profile.

9. Device (1) according to any one of claims 1 to 6, **characterised in that** the vanes (823) are flared bevelled.

10. Device (1) according to any one of claims 1 to 6, **characterised in that** the vanes (823) are flared along a profile having at least two separate successive portions each having a concave, or convex, or straight profile.

11. Device (1) according to any one of the preceding claims, **characterised in that** each male clamp (81) and each female clamp (82) is made of one piece.

12. Device (1) according to any one of the preceding claims, **characterised in that** the male clamp (81) has a space for receiving (85) the one or more cutting members, the receiving space opening on the front edge (810), at least on one part of the front edge (810) of the male clamp (81) which contributes to forming the passage (83).
